# EUROPÄISCHE PATENTSCHRIFT

(11) **EP 2 218 623 B1**
(45) Veröffentlichungstag und Bekanntmachung des Hinweises auf die Patenterteilung: **07.09.2011**
(21) Anmeldenummer: 10003093.1
(22) Anmeldetag: 25.06.2004
(51) Int. Cl.: B61D 17/04, B60L 11/02

(54) **Lokomotive mit zwei übereinander angeordneten Antriebseinheiten**
Locomotive with two superposed traction units
Locomotive avec deux unités de traction supperposées

(30) Priorität: 25.06.2003 AT 9812003
(43) Veröffentlichungstag der Anmeldung: 18.08.2010
(62) Teilanmeldung aus: 04737355.0
(73) Patentinhaber: EVOinvent AG, 6030 Ebikon (CH)
(72) Erfinder: Sommerer, Rudolf, 6200 Jenbach (AT)
(74) Vertreter: Gangl, Markus

(56) Entgegenhaltungen:
- DE-A1- 2 707 573
- US-A- 2 205 266
- US-A- 5 129 328
- US-A- 6 066 897

## Beschreibung

Die Erfindung betrifft eine Lokomotive gemäß dem Oberbegriff des Anspruchs 1.

Aus der US 6,066,897 und der US 2,205,266 gehen Lokomotiven mit zwei diesel-elektrischen Antriebseinheiten hervor, welche nebeneinander angeordnet sind.

Aufgabe der Erfindung ist die Schaffung einer besonders wartungsfreundlichen Konstruktion.

Die Erfindung sieht vor, dass bei einer Lokomotive mit einem Rahmen, der auf Fahrgestellen angeordnet ist und einen Obergurt und einen Untergurt sowie wenigstens zwei diesel-elektrische Antriebseinheit aufweist, wenigstens zwei dieser Antriebseinheiten übereinander angeordnet sind. Dabei kann gemäß einem weiteren Ausführungsbeispiel der Erfindung die untere Antriebseinheit unter den Untergurt und/oder die obere Antriebseinheit über den Obergurt hinausragen. Dadurch wird neben einer Schwerpunktsverlagerung nach unten eine besonders wartungsfreundliche Konstruktion erreicht.

Zur einfachen Montage der Antriebseinheit(en) im Rahmen können alle Anschlüsse einer Antriebseinheit, die gemäß einem Ausführungsbeispiel der Erfindung wenigstens einen Verbrennungsmotor und einen Generator, vorzugsweise genau einen Verbrennungsmotor mit Generator umfasst, in einer vertikalen Ebene ausgebildet sein. Neben dem Verbrennungsmotor und dem Generator kann die Antriebseinheit zusätzlich ein oder mehrere Hilfsaggregate umfassen. Dabei hat es sich als günstig herausgestellt, wenn der Verbrennungsmotor, der gemäß der Erfindung als Dieselmotor ausgebildet ist, zusammen mit dem Generator, eventuell vorhandener Hilfsaggregate und Leitungsinstallationen sowie einem Montagerahmen, eine Vormontageeinheit bildet. Dabei sollte der Montagerahmen zur einfach- oder doppeltschwingungsisolierten Befestigung der Antriebseinheit(en) im Rahmen der Lokomotive ausgebildet sein. Auch die Aufnahme von Kühlluftleiteinrichtungen im Montagerahmen ist denkbar.

Die im Mittelabschnitt des Rahmens zwischen den Seitenteilen angeordneten Antriebseinheiten erzeugen also die für den Antrieb der Lokomotive notwendige Energie, wobei bei diesel-elektrischen Antrieben die Elektromotoren in an sich bekannter Weise im Bereich der Drehgestelle angeordnet sind. Es wäre aber auch ein mechanischer Direktantrieb von den im Mittelabschnitt des Rahmens angeordneten Antriebseinheiten auf die Räder denkbar.

Eine besonders einfache Wartung ergibt sich weiters bei einem Schienenfahrzeug mit einem Maschinenraum und einem Schaltraum, in dem die in Schaltschränken angeordneten Steuerungs- bzw. Leistungseinrichtungen angeordnet sind, dann, wenn wenigstens ein Schaltschrank quer zur Längsachse des Schienenfahrzeuges verschiebbar angeordnet ist, und zwar derart, dass der Schaltschrank aus einer Seitenwand des Schaltraumes nach außen verschiebbar bzw. ausziehbar ist. Der durch das Ausfahren der verschiebbaren Schaltschränke im Schaltraum frei gewordene Platz kann dabei als Montagegang benutzt werden, was wiederum mit einer großen Platzersparnis verbunden ist.

Es kann vorgesehen sein, dass der Mittelabschnitt im Wesentlichen aus zwei voneinander beabstandeten Seitenteilen besteht, von denen jeder einen in Längsrichtung verlaufenden Untergurt und Obergurt und mindestens einen den Untergurt mit dem Obergurt verbindenden Steg aufweist, und dass wenigstens eine Antriebseinheit im Mittelabschnitt des Rahmens angeordnet ist, wobei ein bevorzugtes Ausführungsbeispiel der Erfindung vorsieht, dass die Befestigung der mindestens einen Antriebseinheit vorzugsweise ausschließlich an den die Obergurte mit den Untergurten verbindenden Stegen erfolgt.

Im Gegensatz zu den bekannten plattenförmigen Rahmenmittelabschnitten ist in einer Ausführungsform der Mittelabschnitt des Rahmens als sogenannter Brückenrahmen ausgebildet, der im wesentlichen aus insgesamt vier in Längsrichtung des Schienenfahrzeuges angeordneten Längsträgern besteht. Jeweils zwei dieser Längsträger bilden einen Seitenteil mit einem Ober- und einem Untergurt, die durch mindestens einen Steg miteinander verbunden sind. Eine derartige Konstruktion erlaubt eine variable Anordnung der Antriebseinheiten - sowohl in horizontaler als auch in vertikaler Richtung - und bietet zudem, in Folge der zwischen den Untergurten und Obergurten verbleibenden Freiräume, die Möglichkeit, den Maschinenraum von unten zu belüften, beispielsweise mit an der Unterseite des Maschinenraums angeordneten, vorzugsweise verstellbaren Luftleitblechen.

Um einen ungehinderten Ausbau der diesel-elektrischen Antriebseinheit(en) nach oben und unten zu erlauben, ist gemäß einer weiteren Ausführungsform der Erfindung vorgesehen, dass an wenigstens zwei sich in Bezug auf die Längsachse des Rahmens gegenüberliegenden Stegen Befestigungskonsolen zur Montage des/der Antriebseinheit(en) angeordnet bzw. anordenbar sind.

Weist, wie in einem weiteren Ausführungsbeispiel der Erfindung vorgesehen, jeder Mittelabschnitt eines Seitenteiles genau zwei den Untergurt mit dem Obergut verbindende Stege auf, sind die vorzugsweise als Konsolen ausgeführten Befestigungspunkte an diesen beiden Stegen angeordnet. Aber auch die Anordnung zusätzlicher vertikaler Stege, an denen die Befestigungspunkte angeordnet sind, ist denkbar.

In der Regel wird die Verbindung zwischen den Auflageabschnitten und dem Mittelabschnitt des Rahmens an den Stegen, die sowohl vertikal als auch schräg ausgerichtet sein können, erfolgen. Um die statischen Eigenschaften der erfindungsgemäßen Rahmenkonstruktion zu verbessern, können gemäß einem weiteren Ausführungsbeispiel der Erfindung zwischen den Obergurten und/oder den Untergurten Querträger angeordnet sein. Dadurch erhält man eine Rahmenkonstruktion, bei der die Seitenteile, die einen Obergurt, einen Untergurt und wenigstens einen Steg aufweisen, über Querträger miteinander verbunden sind, was gleichzusetzen ist mit einem Mittelabschnitt eines Rahmens, der im wesentlichen aus einem Ober- und einem Unterteil besteht, wobei sowohl das Ober- als auch das Unterteil jeweils zwei durch Querträger verbundene Seitenträger aufweisen und bei dem das Ober- und das Unterteil über vertikal verlaufende Stege miteinander verbunden sind.

Eine weitere Ausführungsform der Erfindung sieht vor, dass die Untergurte unterhalb der Auflageabschnitte verlaufen, d. h., der Rahmen ist im Bereich seines

Mittelabschnittes nach unten durchgekröpft, wodurch eine Verlagerung des Schwerpunktes nach unten erreicht wird.

Eine Verringerung des Platzbedarfes wird dann erreicht, wenn gemäß einem besonders bevorzugten Ausführungsbeispiel der Erfindung die Obergurte oberhalb der Auflageabschnitte verlaufen, günstigerweise in der oberen Hälfte, vorzugsweise im obersten Drittel des Schienenfahrzeuges. Anders ausgedrückt heißt das, dass der Abstand zwischen den Untergurten und den Obergurten so groß sein sollte, dass zwei Antriebseinheiten übereinander im Maschinenraum angeordnet werden können. Neben der enormen Platzersparnis entsteht durch eine derartige Anordnung zusammen mit dem Umstand, dass der Maschinenraum im wesentlichen durch die Ober- und die Untergurte begrenzt wird, wobei zwischen den zwei Untergurten und den zwei Obergurten jeweils ein Freiraum verbleibt, eine Kaminwirkung. Diese natürliche Belüftung des Maschinenraumes kann durch an der Unterseite des Maschinenraumes angeordnete und gegebenenfalls verstellbare Luftleitbleche weiter unterstützt werden.

Die in der Regel bisher durch den Wagenaufbau erfolgte Abtrennung des Maschinenraumes vom Schaltraum bzw. der Fahrerkabine kann bei einem erfindungsgemäßen Schienenfahrzeug in einfacher Weise dadurch erfolgen, dass der Mittelabschnitt wenigstens an einer Stirnseite von einer Wand begrenzt ist. Dabei spielt es keine Rolle, ob diese Wand zwischen den Stegen und allenfalls vorhandenen Querträgern angeordnet ist oder ob die Stege und allenfalls vorhandene Querträger Teil dieser Wand sind. Die den Maschinenraum begrenzenden Seiten- und Stirnwände sind so ausgeführt, dass die Festigkeits- und Montageanforderungen bei gleichzeitig ausreichender Schallisolation erfüllt werden können. Die beiden die Stirnseiten des Maschinenraumes begrenzenden Schottwände erhöhen dabei die Torsionssteifigkeit des Lokomotivenrahmens über die Fahrzeuglängsachse und können Schall- und Wärmeisolationen sowie Leitungsinstallationen zur Versorgung der Antriebseinheiten und gegebenfalls Konsolen zur Aufnahme eventuell vorhandener Hilfsaggregate tragen. Dabei werden alle Anschlüsse zu den Antriebseinheiten vorzugsweise in einer vertikalen Ebene realisiert.

Um sicherzustellen, dass die erfindungsgemäße Rahmenkonstruktion für ein Schienenfahrzeug den enormen Beanspruchungen, denen sie ausgesetzt ist, Stand hält, sieht ein weiteres Ausführungsbeispiel der Erfindung vor, dass wenigstens der Obergurt eines Seitenteiles über den Mittelabschnitt in einen Auflageabschnitt des Rahmens ragt, wobei es sich als günstig herausgestellt hat, wenn der über den Mittelabschnitt in einen Auflageabschnitt ragende Obergurt vorzugsweise in seinem Endbereich über einen Steg mit dem Auflageabschnitt verbunden ist. Neben den statischen Verbesserungen bringt eine derartige Ausführungsform den Vorteil mit sich, dass der im Bereich des Auflageabschnittes angeordnete Obergurt zusammen mit dem diesen Obergurt mit dem Auflageabschnitt verbindenden Steg gleichzeitig den Seitenteil des Schaltraumes bilden kann.

Ein weiteres bevorzugtes Ausführungsbeispiel der Erfindung sieht vor, dass der Mittelabschnitt nach unten offen ist, wobei es sich als günstig erwiesen hat, wenn die zwischen den Untergurten der Seitenteile des Mittelabschnittes gebildete Bodenfläche zu mehr als 50 %, vorzugsweise mehr als 80%, offen ist. Eine besonders einfache Konstruktion ergibt sich dabei, wenn die Bodenfläche, ausgenommen eventuell vorhandene Querträger, vollständig offen ist, sodass die geschweißte Rahmenstruktur im Bereich des Maschinenraumes unten und oben vollflächig offen ist, d.h. der Maschinenraum wird nur durch die Seiten- und Stirnwände begrenzt. Gemäß einem bevorzugten Ausführungsbeispiel ist dabei vorgesehen, dass der Abstand zwischen wenigstens zwei Querträgern mindestens 3 m, vorzugsweise 5 m, beträgt. Das bedeutet, dass der Abstand zwischen wenigstens zwei Querträgern größer ist als die Längserstreckung der Antriebseinheit(en), wodurch erreicht wird, dass die mindestens eine Antriebseinheit unter die Untergurte hinunterragend im Rahmen der Lokomotive angeordnet werden kann.

Weiters soll ein Schienenfahrzeug mit einer Kühleinrichtung, die wenigstens zwei vorzugsweise im Dachbereich angeordnete Kühlanlagen, die in Fahrtrichtung hintereinander liegen und mit einem Kühlmittelstrom beaufschlagbar sind, aufweist, angegeben werden.

Durch die Nutzung des Fahrtwindes ergeben sich fahrtrichtungsabhängige Unterschiede in der Kühlleistung zwischen der in Fahrtrichtung vorne bzw. hinten liegenden Kühlanlage. Erfindungsgemäß soll dieser Unterschied durch eine Einrichtung zur Steuerung der Verteilung des Kühlmittelstromes auf die in Fahrtrichtung vorne bzw. hinten liegenden Kühlanlagen ausgeglichen werden.

Ein weiteres Ausführungsbeispiel der Erfindung sieht bei einem gattungsgemäßen Schienenfahrzeug, das Luftleiteinrichtungen aufweist, die den Fahrtwind auf die Kühlanlagen leiten, vor, dass die Luftleiteinrichtungen über Verstelleinrichtungen verstellbar ausgebildet sind, sodass die in Fahrtrichtung vorzugsweise hinten liegenden Kühlanlagen, durch eine zusätzliche Zwangsbelüftung unterstützt werden können.

Es kann vorgesehen sein, eine Kühleinrichtung eines Schienenfahrzeuges derart zu betreiben, dass die Einrichtung zur Steuerung der Verteilung des Kühlmittelstromes und/oder die Luftleiteinrichtungen und/oder bei den Kühlanlagen vorgesehene Ventilatoren je nach Bewegungszustand, insbesondere der Fahrtrichtung, des Schienenfahrzeugs unterschiedlich eingestellt wird bzw. werden. Dabei geht man von der Überlegung aus, den Anteil der vorderen bzw. hinteren Kühlanlage an der Gesamtkühlleistung zu steuern, indem man entweder die Leistungsstärke der vorzugsweise hinteren Kühlanlagen durch eine zusätzliche Zwangsbelüftung erhöht oder indem man den Kühlmittelstrom unterschiedlich zwischen den in ihrer Leistungsstärke - je nach Fahrtrichtung - verschiedenen vorderen bzw. hinteren Kühlanlagen aufteilt.

Dies kann in einfacher Weise dadurch erfolgen, dass bei Fahrt des Schienenfahrzeugs die Einrichtung zur Steuerung der Verteilung des Kühlmittelstromes so eingestellt wird, dass der Kühlmittelstrom zur - in Fahrtrichtung gesehen - vorderen Kühlanlage größer ist als der zur hinteren Kühlanlage, wobei vorzugsweise der Kühlmittelstrom zur in Fahrtrichtung vorne liegenden Kühlanlage erhöht und gleichzeitig in gleichem Maße der Kühlmittelstrom zur in Fahrtrichtung hinten liegenden Kühlanlage reduziert wird. Derselbe Effekt wird gemäß einem weiteren Ausführungsbeispiel der Erfindung dann erreicht, wenn bei Fahrt des Schienenfahrzeugs die Luftleiteinrichtungen und/oder bei den Kühlanlagen angeordnete Ventilatoren so eingestellt werden, dass die - in Fahrtrichtung gesehen - hintere Kühlanlage mit einem erhöhten Luftstrom beaufschlagt wird.

Weitere Vorteile und Einzelheiten der Erfindung werden unter Bezugnahme auf die in der Zeichnung dargestellten Figuren näher erläutert.

Darin zeigt
- Fig. 1: schematisch eine Seitenansicht eines erfindungsgemäßen Rahmens einer Lokomotive,
- Fig. 2a: einen Schnitt entlang der Linie C aus Fig. 1,
- Fig. 2b: einen Schnitt entlang der Linie D aus Fig. 1,
- Fig. 2c: schematisch einen Querschnitt durch den Maschinenraum mit darin angeordneten Antriebseinheiten,
- Fig. 3a und 4a: Teilseitenansichten einer erfindungsgemäßen Lokomotive,
- Fig. 3b und 4b: Teildraufsichten auf eine erfindungsgemäße Lokomotive,
- Fig. 5: eine schematische Darstellung des Funktionsprinzips einer erfindungsgemäßen Kühleinrichtung,
- Fig. 6: perspektivisch eine Prinzipskizze einer erfindungsgemäßen Rahmen- konstruktion mit einer Schottwand und
- Fig. 7: perspektivisch eine Prinzipskizze einer erfindungsgemäßen Rahmen- konstruktion mit zwei übereinander angeordneten Antriebseinheiten.

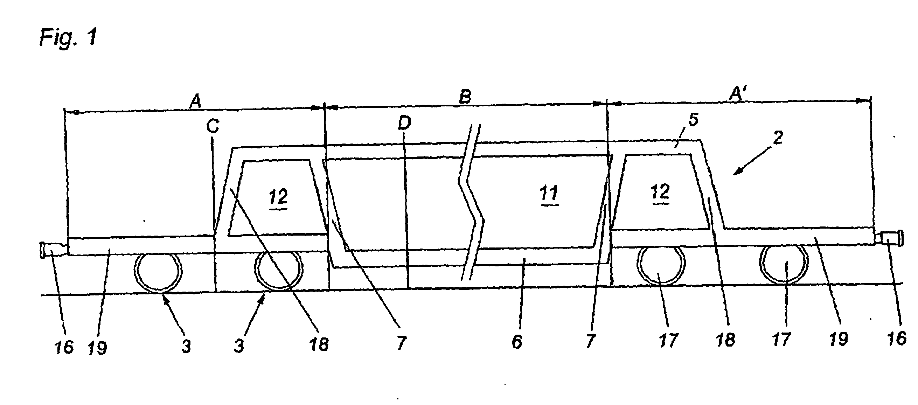

Der in Fig. 1 dargestellte Rahmen 2 einer Lokomotive weist zwei Auflageabschnitte A, A' auf, die auf Fahrgestellen 3 mit Rädern 17 gelagert sind. Zwischen den beiden Auflageabschnitten A, A' erstreckt sich der Mittelabschnitt B des Rahmens 2. Im Bereich des Mittelabschnittes B ist der Rahmen 2 nach unten durchgekröpft, wodurch die Fahreigenschaften des Schienenfahrzeuges insbesondere auf schlechten Gleisanlagen sowie in engen Kurven verbessert werden und die Zugänglichkeit zu den Aggregaten erleichtert wird. Der Seitenteil 4 des Mittelabschnittes B besteht aus einem Untergurt 6 und einem Obergurt 5, die durch zwei Stege 7 miteinander verbunden sind. Beim gezeigten Ausführungsbeispiel verlaufen die Stege 7 aus statischen Gründen vom Untergrund 6 schräg nach oben zum Obergurt 5. Es wäre aber auch möglich, die Stege 7 vertikal bzw. vom Untergurt 6 schräg nach innen zum Obergurt 5 verlaufen zu lassen. Die Obergurte 5, 5' und Untergurte 6, 6' begrenzen den Maschinenraum 11 seitlich bzw. oben und unten. Die Freiräume, die die Untergurte 6, 6' bzw. die Obergurte 5, 5' zwischen sich einschließen, können aus Gründen der besseren Belüftung frei bleiben. Die Stirnseiten des Mittelabschnittes B, die von den Stegen 7 und allenfalls vorhandenen Querträgern gebildet werden, können beispielsweise durch strukturtragende Wände 9 geschlossen werden, sodass der Maschinenraum 11 in Fahrtrichtung vorne und hinten verschlossen ist, während die Unterseite des Maschinenraumes 11 und die Oberseite des Maschinenraumes 11 - bis auf selektive Regenschutzvorrichtungen für die Antriebseinheiten - komplett offen ist.

Beim gezeigten Ausführungsbeispiel der Erfindung ist der Obergurt 5 des Seitenteiles 4 länger als der Untergurt 6 und ragt über den Mittelabschnitt B in die Auflageabschnitte A, A' des Rahmens 2 hinein, und ist in seinen beiden Endbereichen über Stege 18 mit Längsträgern 19 der Auflageabschnitte A, A' verbunden. Diese in die Auflageabschnitte A, A' ragenden Teile des Obergurtes 5 bilden zusammen mit den Stegen 18 die Seitenteile des Schaltraumes 12. An den Stirnseiten des Rahmens 2 sind wie üblich Puffer 16 angeordnet.

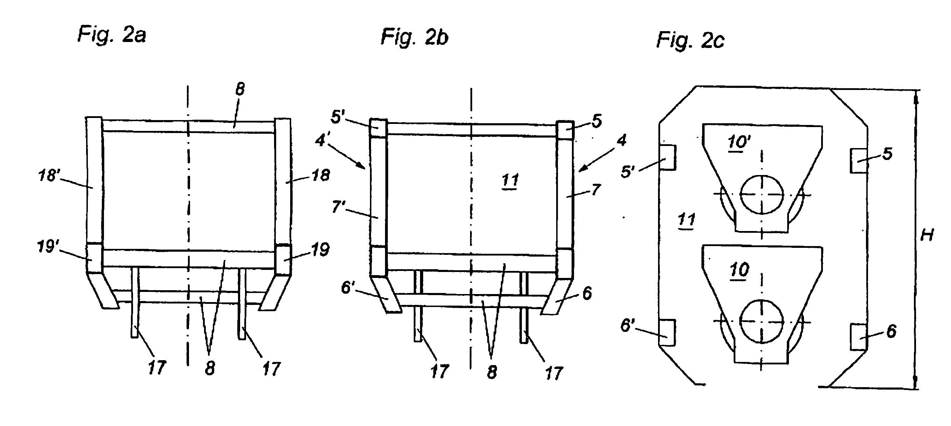

Aus Fig. 2a geht hervor, dass der Auflageabschnitt A zwei seitliche Längsträger 19 aufweist, die über einen Querträger 8 miteinander verbunden sind. Selbstverständlich ist es auch denkbar, den Rahmen 2 im Auflageabschnitt A plattenförmig auszubilden.

Aus Fig. 2b ist ersichtlich, dass die beiden Seitenteile 4, 4' sowohl im Bereich ihrer Obergurte 5, 5', als auch im Bereich ihrer Untergurte 6, 6' über Querträger 8 miteinander verbunden sind und auf diese Weise den Maschinenraum 11 umschließen.

Die Fig. 2c zeigt im Prinzip einen Querschnitt durch den Maschinenraum 11 mit darin angeordneten Antriebseinheiten 10, 10'. Um die beiden Antriebseinheiten 10, 10' übereinander anordnen zu können, ist es notwendig, dass die Obergurte 5, 5' in der oberen Hälfte, vorzugsweise im obersten Drittel der Höhe des Schienenfahrzeuges 1 angeordnet sind. Die Antriebseinheiten 10, 10' werden dabei an den Untergurten 6. 6' bzw. den Obergurten 5, 5' des Rahmens 2 montiert (nicht dargestellt). Der seitlich bzw. oberhalb der Antriebseinheiten 10, 10' verbleibende Freiraum des Maschinenraumes 11 kann beispielsweise zur Anordnung von Auspuffanlagen genützt werden.

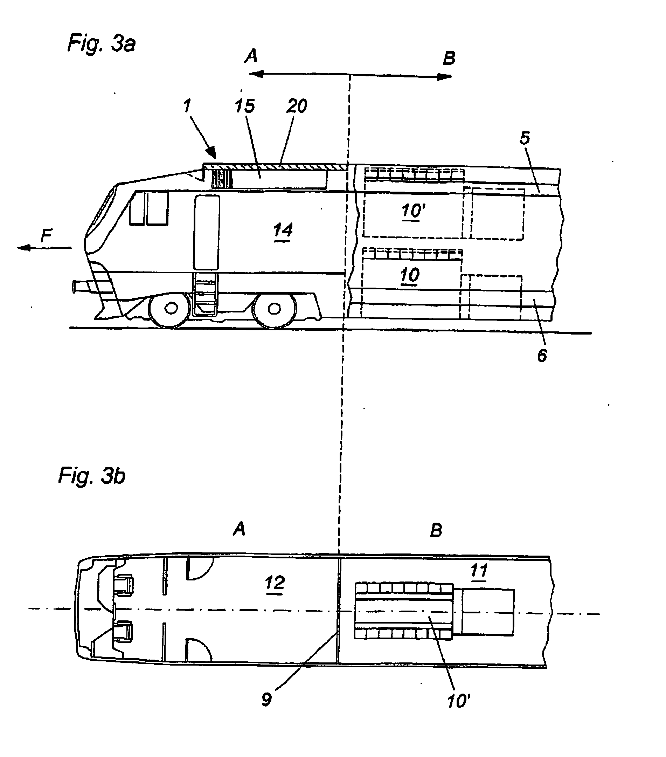

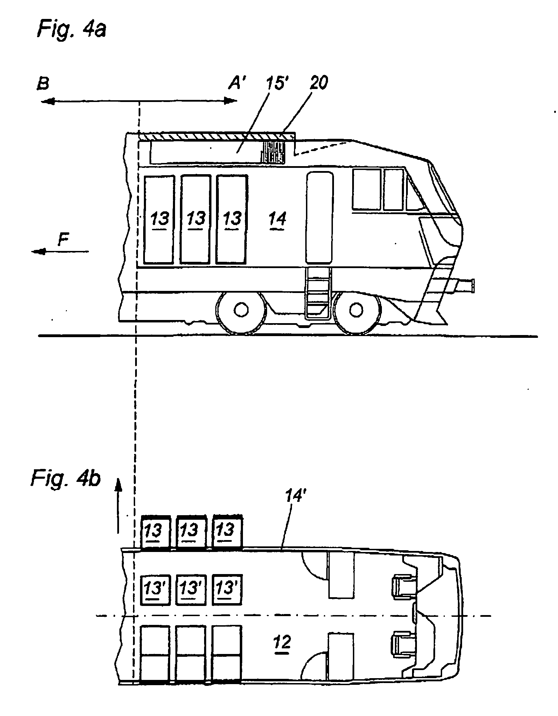

Fig. 3a und 3b zeigen den in Fahrtrichtung F vorne liegenden Auflageabschnitt A sowie einen Teil des Mittelabschnittes B des Rahmens 2 in Seitenansicht bzw. Draufsicht. In Fahrtrichtung gesehen vor dem Mittelabschnitt B liegt der Auflageabschnitt A. Eine Wand 9 trennt den Maschinenraum 11 vom Schaltraum 12, dessen seitliche Begrenzung durch eine Seitenwand 14 erfolgt. Im Dachbereich des über dem Auflageabschnitt A angeordneten Wagenaufbaus ist eine erste Kühlanlage 15 einer Kühleinrichtung angeordnet. Eine zweite Kühlanlage 15' der Kühleinrichtung ist im Dachbereich des über dem in Fahrtrichtung hinten angeordneten Auflageabschnittes A' angeordnet (Fig. 4a).

Über den Kühlanlagen 15, 15' sind jeweils Luftleiteinrichtungen 20 angeordnet, die beispielsweise als Luftleitbleche oder als Ventilatoren ausgebildet sein können, wobei bei der in Fahrtrichtung vorne liegenden Kühlanlage 15 der Fahrtwind im wesentlichen stirnseitig zugeleitet wird, während die Einleitung des Fahrtwindes bei der in Fahrtrichtung F hinten angeordneten Kühlanlage 15' im hauptsächlich über die Luftleiteinrichtung 20 erfolgt.

Weiters ist aus den Fig. 4a und 4b ersichtlich, dass im Schaltraum 12 Schaltschränke 13 quer zur Längsrichtung des Schienenfahrzeuges verschiebbar angeordnet sind. Dies bringt einerseits den Vorteil mit sich, dass Wartungs- bzw. Bedienungsvorgänge an den Schaltschränken 13 zum Teil von außen durchgeführt werden können, andererseits bietet eine derartige Konstruktion den Vorteil einer enormen Platzersparnis, da der notwendige Bewegungsraum zum Warten der fest stehenden Schaltschränke 13' bei Betrieb des Schienenfahrzeuges den Platz für die eingeschobenen Schaltschränke 13 bietet.

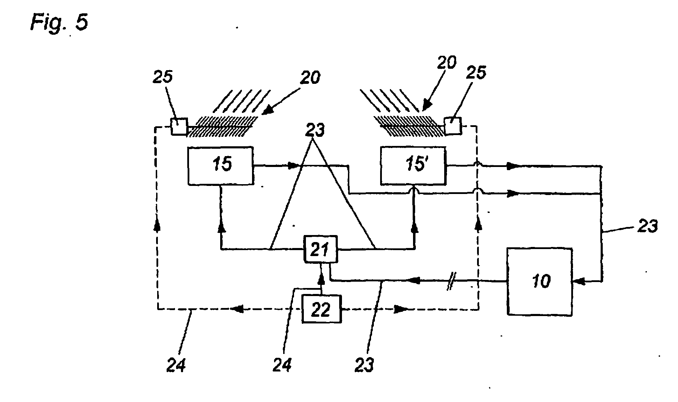

In Fig. 5 ist schematisch das Funktionsprinzip einer Kühleinrichtung dargestellt. Man geht von der Überlegung aus, dass in Folge der Nutzung des Fahrtwindes als Kühlmedium für die Kühlanlagen die in Fahrtrichtung vorne liegende Kühlanlage 15 einen wesentlich größeren Anteil an der Gesamtleistung der Kühleinrichtung erbringen muss, da die in Fahrtrichtung hinten liegende Kühlanlage 15' naturgemäß mit weniger Fahrtwind und in der Regel zusätzlich noch mit der erwärmten Abluft aus dem Maschinenraum bzw. der Auspuffanlage beaufschlagt wird. Um den Anteil der vorderen bzw. hinteren Kühlanlagen an der Gesamtleistung der Kühleinrichtung entsprechend der Leistungsstärke, die ja vom Kühlmedium anhängt, der vorderen bzw. hinteren Kühlanlage anzupassen, gibt es im Prinzip zwei Möglichkeiten.

Einerseits kann der Kühlmittelstrom unterschiedlich stark auf die vordere bzw. hintere Kühlanlage aufgeteilt werden. Dazu weist die Kühleinrichtung eine Steuereinrichtung 22 auf, die über eine Steuerleitung 24 mit einem Ventil 21 verbunden ist und an das Ventil 21 Steuersignale abgibt. Das Ventil 21 ist eingangsseitig über eine Kühlmittelleitung 23 mit einem Motor 10 verbunden. Der vom Motor 10 zum Ventil 21 fließende heiße Kühlmittelstrom wird in Abhängigkeit des Signals von der Steuereinrichtung 22 unterschiedlich stark zwischen den Kühlanlagen 15, 15' aufgeteilt. Das heiße Kühlmittel fließt also über die Kühlmittelleitung 23 zu den jeweiligen Kühlanlagen 15, 15', wird dort gekühlt und in weiterer Folge wieder dem Motor 10 zugeführt, sodass sich der Kühlmittelkreislauf schließt. Eine Grundidee der Erfindung besteht also darin, der vorderen Kühlanlage 15, die ja aufgrund der größeren Menge an kaltem Fahrtwind leistungsstärker als die hintere Kühlanlage 15' ist, eine größere Menge an abzukühlendem Kühlmittelstrom zuzuführen und so die leistungsschwächere hintere Kühlanlage 15' zu entlasten. Auf diese Weise werden beide Kühlanlagen 15, 15' entsprechend ihrer Leistungsstärke in etwa gleich belastet, wodurch vermieden wird, dass im speziellen die hintere Kühlanlage 15' den heißen Kühlmittelstrom nicht in erforderlichem Maße zu kühlen imstande ist.

Andererseits ist es möglich, bei gleichbleibendem Kühlmittelstrom zu beiden Kühlanlagen 15, 15' die Leistungsstärke der hinteren Kühlanlage 15' dadurch zu erhöhen, dass der hinteren Kühlanlage 15' eine höhere Menge an Fahrtwind zugeführt wird. Dazu weist die Kühleinrichtung Luftleiteinrichtungen 20 auf, die beispielsweise von Luftleitblechen oder Ventilatoren gebildet werden können. Diese Luftleiteinrichtungen 20 sind mittels einer Verstelleinrichtung 25 je nach Betriebszustand, insbesondere der Fahrtrichtung, des Schienenfahrzeuges verstellbar, wobei die Verstelleinrichtung 25 über eine Steuerleitung 24 mit der Steuereinrichtung 22 verbunden ist. So kann beispielsweise bei Fahrt des Schienenfahrzeuges die in Fahrtrichtung hinten liegende Kühlanlage 15' durch Verstellen der Luftleiteinrichtungen 20 mit mehr Fahrtwind beaufschlagt werden.

Eine optimale Steuerung der Kühleinrichtung, das heißt eine optimale Aufteilung der zu erbringenden Kühlleistung der Kühleinrichtung auf die beiden Kühlanlagen 15, 15' in Abhängigkeit ihrer Leistungsstärke, kann durch eine Kombination beider Maßnahmen erreicht werden. Das heißt, über die Steuereinrichtung 22 wird einerseits die in Fahrtrichtung vorne liegende Kühlanlage 15 mit einem größeren Kühlmittelstrom beaufschlagt und gleichzeitig die in Fahrtrichtung hintere Kühlanlage 15' über die verstellbaren Luftleiteinrichtungen 20 mit erhöhtem Fahrtwind beaufschlagt.

Unabhängig von dem gezeigten Ausführungsbeispiel ist bevorzugt vorgesehen, den von den einzelnen Kühlanlagen zu erbringenden Anteil an der Gesamtkühlleistung einer Kühleinrichtung so zu steuern, dass dieser Anteil der Leistungsstärke der einzelnen Kühlanlage angepasst ist.

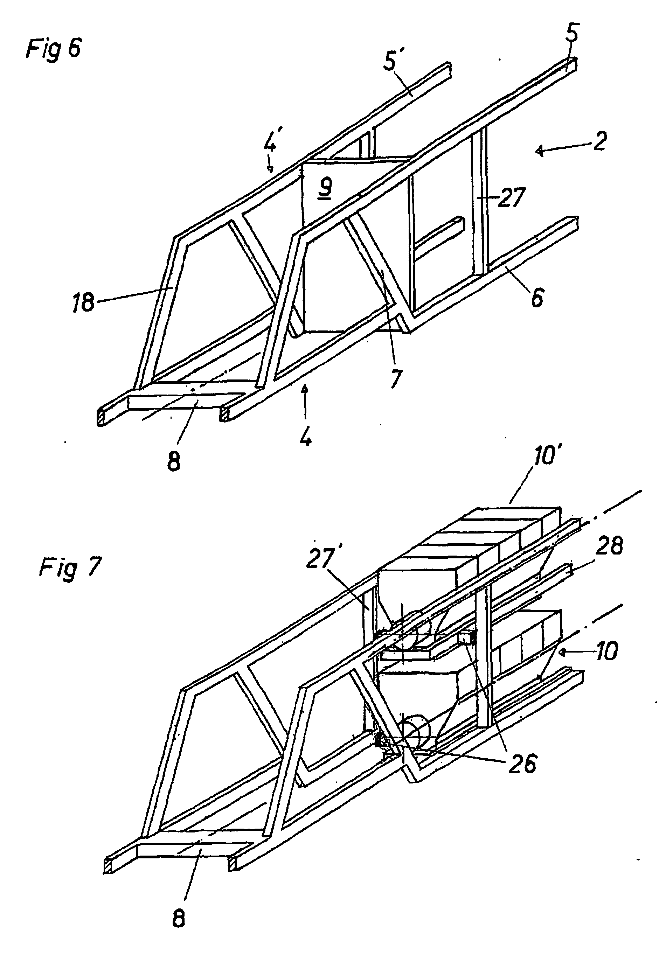

Fig. 6 zeigt eine perspektivische Ansicht eines erfindungsgemäßen Rahmens 2, aus der ersichtlich ist, dass der nach unten durchgekröpfte Mittelabschnitt des Rahmens vom vorderen Auflageabschnitt durch eine Schottwand 9 abgetrennt ist. Zwischen den Obergurten 5, 5' und den Untergurten 6, 6' der beiden Seitenteile 4, 4' sind neben den schräg verlaufenden Stegen 7, 7' zusätzlich vertikal verlaufende Stege 27, 27' angeordnet.

Wie aus Fig. 7 ersichtlich, dienen diese vertikalen Verbindungsstege 27, 27' der Anordnung von Befestigungskonsolen 26, 26'. An diesen Befestigungskonsolen 26, 26', die sowohl an den schrägen Stegen 7, 7', den vertikalen Stegen 27, 27' als auch an den Ober- bzw. Untergurten angeordnet sein können, werden über den Montagerahmen 28 die Antriebseinheiten 10 im Mittelabschnitt des Rahmens montiert. Dabei hat es sich als günstig erwiesen, wenn alle an den Antriebseinheiten 10, 10' angeordneten Anschlüsse in einer Ebene liegend ausgebildet sind.

Es versteht sich von selbst, dass die Erfindung nicht auf die dargestellten Ausführungsbeispiele beschränkt ist. Eine Grundidee der Erfindung besteht darin, eine Rahmenkonstruktion für einen Maschinenrahmen einer Lokomotive zu schaffen, der oben und unten im Wesentlichen offen ist und auf diese Weise neben einer guten Belüftung eine besonders einfache Bauweise erlaubt. So können mit diesem erfindungsgemäßen Rahmen ausgestattete Lokomotiven mit lediglich vier Achsen ausgebildet werden, sodass das Gesamtgewicht einer derartig leistungsfähigen Lokomotive in etwa bei 80 t liegt, während die in der Regel mit bisher sechs Achsen ausgestatteten Lokomotiven dieser Leistungsklasse, dem Stand der Technik entsprechend, ein Gesamtgewicht zwischen 120 und 160 t aufweisen. Dadurch ergibt sich u. a. eine mögliche Betriebsgeschwindigkeit für eine erfindungsgemäße Lokomotive von mindestens 160 km/h, während die Betriebsgeschwindigkeiten bei Lokomotiven nach dem Stand der Technik bei maximal 120 km/h lag.

## Patentansprüche

1. Lokomotive mit einem Rahmen, der auf Fahrgestellen angeordnet ist und einen Obergurt und einen Untergurt aufweist, und wenigstens zwei diesel-elektrischen Antriebseinheiten, **dadurch gekennzeichnet, dass** zwei dieser Antriebseinheiten (10, 10') übereinander angeordnet sind.

2. Lokomotive nach Anspruch 1, **dadurch gekennzeichnet, dass** die untere Antriebseinheit (10) unter die Untergurte (6, 6') und/oder die obere Antriebseinheit (10') über die Obergurte (5, 5') hinausragt.

3. Lokomotive nach einem der Ansprüche 1 bis 2, **dadurch gekennzeichnet, dass** jede Antriebseinheit (10, 10') wenigstens einen Verbrennungsmotor und einen Generator umfasst.

4. Lokomotive nach Anspruch 3, **dadurch gekennzeichnet, dass** jede Antriebseinheit (10, 10') genau einen Verbrennungsmotor mit Generator umfasst.

5. Lokomotive nach Anspruch 3 oder 4, **dadurch gekennzeichnet, dass** wenigstens eine Antriebseinheit (10, 10') zusätzlich ein oder mehrere Hilfsaggregate umfasst.

6. Lokomotive nach einem der Ansprüche 3 bis 5, **dadurch gekennzeichnet, dass** der Verbrennungsmotor ein Dieselmotor ist.

## Claims

1. Locomotive with a frame, which is mounted on carriages and which comprises an upper chord and a lower chord, and with at least two diesel-electric drive units, **characterized in that** two of these drive units (10, 10') are arranged one above the other.

2. Locomotive according to claim 1, **characterized in that** the lower drive unit (10) projects below the lower chords (6, 6') and/or the upper drive unit (10') projects over the upper chords (5, 5').

3. Locomotive according to claim 1 or 2, **characterized in that** each drive unit (10, 10') comprises at least one combustion engine and one generator.

4. Locomotive according to claim 3, **characterized in that** each drive unit (10, 10') comprises precisely one combustion engine with generator.

5. Locomotive according to claim 3 or 4, **characterized in that** at least one drive unit (10, 10') additionally comprises one or more auxiliary plants.

6. Locomotive according to one of claims 3 to 5, **characterized in that** the combustion engine is a diesel engine.

## Revendications

1. Locomotive, comportant un châssis, qui est monté sur des bogies et comporte une membrure supérieure et une membrure inférieure, et au moins deux unités d'entraînement de type diesel-électrique, **caractérisée en ce que** deux de ces unités d'entraînement (10, 10') sont disposées l'une au-dessus de l'autre.

2. Locomotive selon la revendication 1, **caractérisée en ce que** l'unité d'entraînement inférieure (10) s'avance vers le bas au-delà des membrures inférieures (6, 6') et/ou l'unité d'entraînement supérieure (10') s'avance vers le haut au-delà des membrures supérieures (5, 5').

3. Locomotive selon l'une des revendications 1 à 2, **caractérisée en ce que** chaque unité d'entraînement (10, 10') comporte au moins un moteur à combustion interne et un générateur.

4. Locomotive selon la revendication 3, **caractérisée en ce que** chaque unité d'entraînement (10, 10') comporte exactement un moteur à combustion interne avec générateur.

5. Locomotive selon la revendication 3 ou 4, **caractérisée en ce qu'**au moins une unité d'entraînement (10, 10') comporte en plus un ou plusieurs groupes auxiliaires.

6. Locomotive selon l'une quelconque des revendications 3 à 5, **caractérisée en ce que** le moteur à combustion interne est un moteur diesel.
